# EUROPEAN PATENT APPLICATION

(11) **EP 4 576 866 A2**
(43) Date of publication of application: **25.06.2025**
(21) Application number: 25175710.0
(22) Date of filing: 24.06.2021
(51) Int. Cl.: H04W 24/08

(54) **METHOD FOR RECOVERING BEAM PHYSICAL UPLINK CONTROL CHANNEL, AND APPARATUS**

(62) Divisional of application: 21946444.3
(71) Applicant: Beijing Xiaomi Mobile Software Co., Ltd., Beijing 100085 (CN)
(72) Inventor: LI, Mingju, Beijing, 100085 (CN)
(74) Representative: dompatent von Kreisler Selting Werner - Partnerschaft von Patent- und Rechtsanwälten mbB

(57) **Abstract**

Provided in the embodiments of the present disclosure are a method for recovering a beam for a physical uplink control channel, and an apparatus, which method and apparatus can be applied to the technical field of communications. A method executed by a terminal device comprises: the terminal device detecting that a first transmission and reception point (TRP) is in a beam failure state, and determining a recovered beam for a physical uplink control channel (PUCCH). Then, the terminal device can perform communication transmission by means of the recovered beam determined for the PUCCH. Therefore, the influence on the communication transmission can be reduced to the greatest possible extent, thereby improving the quality and efficiency of communication transmission.

## Description

### TECHNICAL FIELD

The present disclosure relates to a field of communication technologies, and particularly to a method for beam recovery of a physical uplink control channel and an apparatus thereof.

### BACKGROUND

Generally, in a new radio (NR) technology, since high-frequency channels attenuate quickly, it needs to use beam based transmission and reception to ensure coverage. In NR, since the control channel also uses beam based transmission and reception, when a terminal device moves or an antenna direction rotates, the terminal device may experience beam failure. When a transmission and reception point (TRP) that provides communication services for the terminal is in a beam failure state, it may be not able to perform normal communication, thereby affecting communication transmission.

### SUMMARY

Embodiments of the present disclosure provide a method and an apparatus for beam recovery of a physical uplink control channel, which can be applied in the field of communication technologies. When the terminal device detects that a first TRP is in a beam failure state, it can determine a recovery beam for the physical uplink control channel PUCCH, and then perform communication transmission via the determined recovery beam for the PUCCH. Therefore, the impact on communication transmission can be minimized, and the quality and efficiency of communication transmission can be improved.

In a first aspect, embodiments of the present disclosure provide a method for beam recovery of a physical uplink control channel. The method is performed by a terminal device, and includes: detecting by the terminal device that a first transmission and reception point TRP is in a beam failure state, and determining a recovery beam for the physical uplink control channel PUCCH.

In the solution, when the terminal device detects that the first TRP is in the beam failure state, it can determine the recovery beam for the PUCCH, and then perform communication transmission via the determined recovery beam for the PUCCH. Therefore, the impact on communication transmission can be minimized, and the quality and efficiency of communication transmission can be improved.

Optionally, determining the recovery beam for the physical uplink control channel PUCCH includes:
determining that the recovery beam for the PUCCH is a beam corresponding to a physical random access channel PRACH used by the terminal device.

In the solution, the terminal device can determine that the recovery beam for the PUCCH is the beam corresponding to the PRACH, and then perform communication transmission via the determined recovery beam for the PUCCH. Therefore, the impact on communication transmission can be minimized, and the quality and efficiency of communication transmission can be improved.

Optionally, the method further includes:
determining that a TRP corresponding to a PRACH resource used by the terminal device is the first TRP according to a mapping relationship between PRACH resources and TRPs.

Optionally, determining the recovery beam for the physical uplink control channel PUCCH includes:
transmitting first indication information, in which the first indication information includes a first beam identity; and
determining that the recovery beam for the PUCCH is a first beam corresponding to the first beam identity.

In the solution, the terminal device can indicate the first beam identity to the network device, and determine that the recovery beam for the PUCCH is the first beam corresponding to the first beam identity, and then perform communication transmission via the determined recovery beam for the PUCCH. Therefore, the impact on communication transmission can be minimized, and the quality and efficiency of communication transmission can be improved.

Optionally, transmitting the first indication information includes:
transmitting the first indication information based on a physical uplink shared channel PUSCH medium access control MAC control element CE.

In the solution, the terminal device can transmit the first indication information through the PUSCH MAC CE, which can make the ways of transmitting the first indication information richer and more diverse.

Optionally, the first indication information further includes the first TRP, and determining that the recovery beam for the PUCCH is the first beam corresponding to the first beam identity includes:
determining that a recovery beam for a PUCCH associated with the first TRP is the first beam corresponding to the first beam identity.

In the solution, the terminal device can determine that the recovery beam for the PUCCH associated with the first TRP is the first beam corresponding to the first beam identity, and then perform communication transmission via the determined recovery beam for the PUCCH. Therefore, the impact on communication transmission can be minimized, and the quality and efficiency of communication transmission can be improved.

Optionally, when a second TRP is in the beam failure state, the PUCCH associated with the first TRP is used to transmit a beam failure recovery scheduling request, in which the second TRP is different from the first TRP.

Optionally, the first indication information further includes the first TRP, and determining that the recovery beam for the PUCCH is the first beam corresponding to the first beam identity includes:
determining that a recovery beam for a PUCCH associated with a second TRP is the first beam corresponding to the first beam identity, in which the second TRP is different from the first TRP.

In the solution, the terminal device can determine that the recovery beam for the PUCCH associated with the second TRP is the first beam corresponding to the first beam identity, and then perform communication transmission via the determined recovery beam for the PUCCH. Therefore, the impact on communication transmission can be minimized, and the quality and efficiency of communication transmission can be improved.

Optionally, when the second TRP is in the beam failure state, the PUCCH associated with the second TRP is used to transmit a beam failure recovery scheduling request.

Optionally, determining the recovery beam for the PUCCH includes:
determining that the recovery beam for the PUCCH is a beam corresponding to a designated control resource set.

In the solution, the terminal device can determine that the recovery beam for the PUCCH is the beam corresponding to the designated control resource set, and then perform communication transmission via the determined recovery beam for the PUCCH. Therefore, the impact on communication transmission can be minimized, and the quality and efficiency of communication transmission can be improved.

Optionally, the method further includes:
determining that the designated control resource set is a control resource set with a smallest corresponding control resource set number in a latest time unit that needs to monitor a search space set;
   or,
determining that the designated control resource set is a control resource set with a smallest corresponding control resource set number in control resource sets belonging to a first control resource set pool in a latest time unit that needs to monitor a search space set, in which a first control resource set pool index is associated with the PUCCH.

In the solution, the terminal device can determine the designated control resource set in multiple ways, which can make the ways of determining the designated control resource set more flexible and richer.

Optionally, the method further includes:
determining the first control resource set pool index associated with the PUCCH according to configuration information of an association relationship between PUCCHs and control resource set pool indexes; or
determining the first control resource set pool index associated with the PUCCH according to configuration information of an association relationship between PUCCHs and beam failure detection reference signal set indexes.

In the solution, the terminal device can determine the first control resource set index in multiple ways, which can make the ways of determining the first control resource set index more flexible and richer.

Optionally, the method further includes:
determining that the beam corresponding to the designated control resource set is a beam corresponding to a physical random access channel PRACH used by the terminal device.

In the solution, the terminal device can determine that the beam corresponding to the designated control resource set is the beam corresponding to the PRACH, which can make the ways of determining the beam corresponding to the designated control resource set more diverse and richer.

Optionally, the method further includes:
transmitting second indication information, in which the second indication information includes a second beam identity;
determining that the beam corresponding to the designated control resource set is a second beam corresponding to the second beam identity.

In the solution, the terminal device can indicate the second beam identity to the network device through the second indication information, and determine that the beam corresponding to the designated control resource set is the second beam corresponding to the second beam identity, which can make the ways of determining the beam corresponding to the designated control resource set more diverse and richer.

Optionally, the second indication information includes at least one of:
a cell identity in the beam failure state;
a TRP identity in the beam failure state;
a second beam identity; or
a TRP identity and/or a cell identity associated with the second beam identity.

Optionally, the TRP identity includes at least one of: a TRP identification number, a control resource set pool index identity, or a beam failure detection reference signal set identity.

Optionally, the PUCCH includes at least one of:
a PUCCH configured to transmit a scheduling request;
a PUCCH configured to transmit a beam failure recovery scheduling request; or
a PUCCH configured to transmit a non-scheduling request.

In a second aspect, embodiments of the present disclosure provide an apparatus for communication, which has part or all of functions of the terminal device in the method described in the first aspect above, for example, the functions of the apparatus for communication may have the functions of part or all of embodiments in the present disclosure, also may have the functions of independently implementing any one of the embodiments in the present disclosure. The functions described above may be implemented by hardware, or may be implemented by executing corresponding software on the hardware. The hardware or software includes one or more units or modules corresponding to the above functions.

In an implementation manner, a structure of the apparatus for communication may include a transceiver module and a processing module. The processing module is configured to support the apparatus for communication to perform corresponding functions in the foregoing method. The transceiver module is configured to support communication between the apparatus for communication and other devices. The apparatus for communication may further include a storage module, which is configured to be coupled with the transceiver module and the processing module, and to store necessary computer programs and data of the apparatus for communication.

As an example, the processing module may be a processor, the transceiver module may be a transceiver or a communication interface, and the storage module may be a memory.

The apparatus for communication provided by the present disclosure can determine the recovery beam for the PUCCH when detecting that the first TRP is in the beam failure state, and then perform communication transmission via the determined recovery beam for the PUCCH. Therefore, the impact on communication transmission can be minimized, and the quality and efficiency of communication transmission can be improved.

In a third aspect, embodiments of the present disclosure provide an apparatus for communication including a processor. When the processor invokes a computer program in a memory, it executes the method described in the first aspect above.

In a fourth aspect, embodiments of the present disclosure provide an apparatus for communication. The apparatus for communication includes a processor and a memory. A computer program is stored in the memory. The processor executes the computer program stored in the memory, so that the apparatus for communication executes the method described in the first aspect above.

In a fifth aspect, embodiments of the present disclosure provide an apparatus for communication. The apparatus includes a processor and an interface circuit. The interface circuit is configured to receive code instructions and transmit them to the processor. The processor is configured to run the code instructions to make the apparatus executes the method described in the first aspect above.

In a sixth aspect, embodiments of the present disclosure provide a system for beam recovery of a physical uplink control channel. The system includes the apparatus for communication described in the second aspect, or the system includes the apparatus for communication described in the third aspect, or the system includes the apparatus for communication described in the fourth aspect, or the system includes the apparatus for communication described in the fifth aspect.

In a seventh aspect, embodiments of the present invention provide a computer-readable storage medium configured to store instructions used by the above-mentioned terminal device. When the instructions are executed, the method described in the first aspect above is implemented.

In an eighth aspect, the present disclosure further provides a computer program product including a computer program, which, when run on a computer, causes the computer to execute the method described in the first aspect above.

In the ninth aspect, the present disclosure provides a chip system, the chip system includes at least one processor and an interface, configured to support the terminal device to implement the functions involved in the first aspect, for example, determining or processing at least one of the data and the information. In a possible design, the chip system further includes a memory, and the memory is configured to store necessary computer programs and data of the terminal device. The chip system may consist of chips, or may include chips and other discrete components.

In a tenth aspect, the present disclosure provides a computer program that, when run on a computer, causes the computer to execute the method described in the first aspect above.

### BRIEF DESCRIPTION OF THE DRAWINGS

In order to more clearly illustrate technical solutions in embodiments of the present disclosure or the background art, the following will describe the drawings that need to be used in the embodiments of the present disclosure or the background art.
FIG. 1 is a schematic structural diagram of a communication system provided by embodiments of the present disclosure.
Fig. 2 is a schematic flowchart of a method for beam recovery of a physical uplink control channel provided by an embodiment of the present disclosure.
FIG. 3 is a schematic flowchart of a method for beam recovery of a physical uplink control channel provided by another embodiment of the present disclosure.
Fig. 4 is a schematic flowchart of a method for beam recovery of a physical uplink control channel provided by another embodiment of the present disclosure.
FIG. 5 is a schematic flowchart of a method for beam recovery of a physical uplink control channel provided by another embodiment of the present disclosure.
FIG. 6 is a schematic flowchart of a method for beam recovery of a physical uplink control channel provided by another embodiment of the present disclosure.
FIG. 7 is a schematic flowchart of a method for beam recovery of a physical uplink control channel provided by another embodiment of the present disclosure.
FIG. 8 is a schematic flowchart of a method for beam recovery of a physical uplink control channel provided by another embodiment of the present disclosure.
FIG. 9 is a schematic flowchart of a method for beam recovery of a physical uplink control channel provided by another embodiment of the present disclosure.
FIG. 10 is a schematic flowchart of a method for beam recovery of a physical uplink control channel provided by another embodiment of the present disclosure.
FIG. 11 is a schematic flowchart of a method for beam recovery of a physical uplink control channel provided by another embodiment of the present disclosure.
FIG. 12 is a schematic flowchart of a method for beam recovery of a physical uplink control channel provided by another embodiment of the present disclosure.
FIG. 13 is a schematic flowchart of a method for beam recovery of a physical uplink control channel provided by another embodiment of the present disclosure.
FIG. 14 is a schematic structural diagram of an apparatus for communication provided by an embodiment of the present disclosure.
FIG. 15 is a schematic structural diagram of an apparatus for communication provided by another embodiment of the present disclosure.
FIG. 16 is a schematic structural diagram of a chip provided by an embodiment of the present disclosure.

### DETAILED DESCRIPTION

For ease of understanding, terms involved in the present disclosure are introduced first.

### 1. Physical uplink control channel (PUCCH)

The PUCCH can be used by a terminal device to transmit information related to uplink scheduling to a network device, such as a scheduling request (SR), a hybrid automatic repeat request (HARQ), and channel status information (CSI), etc.

### 2. Physical uplink shared channel (PUSCH)

The PUSCH, as a main uplink data carrying channel of the physical layer, is configured for scheduling and transmission of the uplink data, and it can carry control information, user service information and broadcast service information, etc.

### 3. Beam failure

When radio link quality of each reference signal in a reference signal set configured to detect a TRP beam state is lower than a threshold, it is considered that the TRP is in a beam failure state.

In order to better understand a method for beam recovery of a physical uplink control channel disclosed in embodiments of the present disclosure, a communication system to which the embodiments of the present disclosure are applicable is firstly described below.

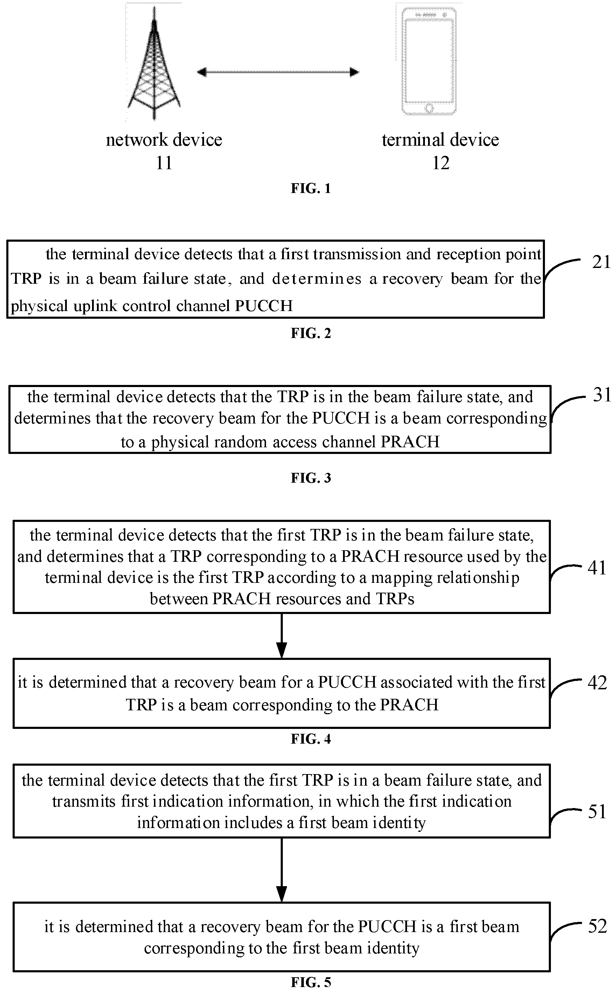

With reference to FIG. 1, FIG. 1 is a schematic structural diagram of a communication system provided by embodiments of the present disclosure. The communication system may include, but is not limited to, a network device and a terminal device. The number and shape of the devices shown in Figure 1 are for example only and do not constitute a limitation to embodiments of the present disclosure. In practical applications, two or more network devices, and two or more terminal devices may be included. The communication system shown in FIG. 1 includes one network device 11 and one terminal device 12 as an example.

It needs to be noted that the technical solutions in embodiments of the present disclosure are applicable to various communication systems. For example, a long term evolution (LTE) system, a 5th generation (5G) mobile communication system, a 5G new radio (NR) system or other future new mobile communication systems.

The network device 11 in embodiments of the disclosure is an entity for transmitting or receiving a signal at a network side. For example, the network device 11 may be an evolved NodeB (eNB), a transmission reception point (TRP), a next generation NodeB (gNB) in a NR system, a base station in other future mobile communication systems, or an access node in a wireless fidelity (WiFi) system. A specific technology and a specific device form adopted by the network device are not limited in embodiments of the present disclosure. The network device provided in embodiments of the present disclosure may consist of a central unit (CU) and a distributed unit (DU). The CU may also be referred to as a control unit, and a network device such as a protocol layer of a base station, may be split by using a structure of the CU-DU, functions of a part of the protocol layer are placed in the CU for centralized control, and functions of a remaining part or all of the protocol layer are distributed in the DU, and the DU is centrally controlled by the CU.

The terminal device 12 in embodiments of the disclosure is an entity for receiving or transmitting a signal at a user side, and for example, a mobile phone. The terminal device may be referred to as a terminal, a user equipment (UE), a mobile station (MS), a mobile terminal (MT), etc. The terminal device may be an automobile with a communication function, a smart automobile, a mobile phone, a wearable device, a tablet computer (Pad), a computer with a wireless transceiving function, a virtual reality (VR) terminal device, an augmented reality (AR) terminal device, a wireless terminal device in industrial control, a wireless terminal device in self-driving, a wireless terminal device in a remote medical surgery, a wireless terminal device in a smart grid, a wireless terminal device in transportation safety, a wireless terminal device in a smart home, etc. A specific technology and a specific device form adopted by the terminal device are not limited in embodiments of the present disclosure.

It can be understood that, the communication system described in embodiments of the present disclosure is intended to explain technical solutions of embodiments of the present disclosure more clearly, and does not constitute a limitation to the technical solutions provided by embodiments of the present disclosure. Those skilled in the art know that, with evolution of a system architecture and emergence of a new business scenario, the technical solutions provided in embodiments of the present disclosure are equally applied to similar technical problems.

The method for beam recovery of a physical uplink control channel and an apparatus thereof provided by the present disclosure will be described in detail below with reference to the accompanying drawings.

With reference to FIG. 2, FIG. 2 is a schematic flowchart of a method for beam recovery of a physical uplink control channel provided by an embodiment of the present disclosure. The method is performed by a terminal device. As shown in Figure 2, the method may include but not limited to the following steps.

In step 21, the terminal device detects that a first transmission and reception point is in a beam failure state, and determines a recovery beam for the physical uplink control channel.

Generally, in NR, since high-frequency channels attenuate quickly, it is necessary to use beam-based transmission and reception to ensure coverage. In NR, since the control channel also uses beam based transmission and reception, when the terminal device moves or the antenna direction rotates, the terminal device may experience beam failure. When a TRP that provides communication services for a terminal is in a beam failure state, it may not be able to perform normal communication, thereby affecting communication transmission.

In the embodiment of the present disclosure, when the terminal device detects that the first TRP is in the beam failure state, it may determine the recovery beam for the PUCCH, and then communicate with the network device through the determined recovery beam for the PUCCH. Therefore, the impact on communication transmission can be reduced as much as possible, and the quality and efficiency of communication transmission can be improved.

It can be understood that a beam in each embodiment of the present disclosure may be a quasi co-location (QCL) type-D in a transmission configuration indication (TCI) state identity (ID), spatial relation information, a spatial domain filter (spatial domain filter), a spatial setting, or a spatial reception parameter, etc., which is not limited in the present disclosure.

Optionally, the PUCCH may include at least one of: a PUCCH configured to transmit a scheduling request; a PUCCH configured to transmit a beam failure recovery (BFR) scheduling request; and a PUCCH configured to transmit a non-scheduling request.

The non-scheduling request may be a hybrid automatic repeat request acknowledgment (HARQ ACK) feedback, or a CSI feedback, etc., which is not limited in the present disclosure.

It can be understood that the purposes of the PUCCHs are different, so when the terminal device detects that the first TRP is in the beam failure state, the determined recovery beam for the PUCCH may be the same or different, which is not limited in the present disclosure.

By implementing the embodiment of the present disclosure, when the terminal device detects that the first TRP is in the beam failure state, it can determine the recovery beam for the PUCCH, and then perform communication transmission via the determined recovery beam for the PUCCH. Therefore, the impact on communication transmission can be reduced as much as possible, and the quality and efficiency of communication transmission can be improved.

With reference to FIG. 3, FIG. 3 is a schematic flowchart of a method for beam recovery of a physical uplink control channel provided by an embodiment of the present disclosure. The method is performed by a terminal device. As shown in Figure 3, the method may include but not limited to the following steps.

In step 31, the terminal device detects that the first TRP is in the beam failure state, and determines that the recovery beam for the PUCCH is a beam corresponding to a physical random access channel PRACH.

For example, when the terminal device detects that the first TRP is in the beam failure state, normal communication may not be performed at this time, thereby affecting communication transmission. Then the terminal device can use a random access process for beam recovery. If the beam used by the terminal device for the physical random access channel (PRACH) is beam #1, it can be determined that the recovery beam for the PUCCH corresponds to the beam #1 corresponding to the RPACH, and then communicate with network device is performed via the beam #1, so as to minimize the impact on communication transmission.

It should be noted that the above example is only an illustration, and cannot be used as a limitation on the beam corresponding to the PRACH and the manner of determining the recovery beam for the PUCCH in the embodiment of the present disclosure.

By implementing the embodiment of the present disclosure, when the terminal device detects that the first TRP is in the beam failure state, it can determine that the PUCCH recovery beam is the beam corresponding to the PRACH, and then perform communication transmission via the determined recovery beam for the PUCCH. Therefore, the impact on communication transmission can be reduced as much as possible, and the quality and efficiency of communication transmission can be improved.

With reference to FIG. 4, FIG. 4 is a schematic flowchart of a method for beam recovery of a physical uplink control channel provided by an embodiment of the present disclosure. The method is performed by a terminal device. As shown in Figure 4, the method may include but not limited to the following steps.

In step 41, the terminal device detects that the first TRP is in the beam failure state, and determines that a TRP corresponding to a PRACH resource used by the terminal device is the first TRP according to a mapping relationship between PRACH resources and TRPs.

The PRACH resource includes a preamble or a random access channel occasion (RO), and each RO may include a block of time-frequency resources. In addition, the preamble may generally include a cyclic prefix (CP) and a sequence, etc., which is not limited in the present disclosure.

It can be understood that different PRACHs may correspond to different preambles, which is not limited in the present disclosure.

Optionally, a mapping relationship between PRACH preambles and TRPs may be stipulated in a protocol or configured by the network device.

For example, the protocol stipulates that PRACH preamble #1 corresponds to TRP #1, PRACH preamble #2 corresponds to TRP #2, and PRACH preamble #3 corresponds to TRP #3. In a case that the terminal device uses PRACH preamble #2 when performing random access, it can be determined that PRACH preamble #2 corresponds to TRP #2 by searching the mapping relationship, so that TRP #2 can be determined to be the first TRP.

Optionally, the mapping relationship between the RO and the TRP of the PRACH may be stipulated in a protocol or configured by a network device.

For example, the protocol stipulates that PRACH RO#1 corresponds to TRP#1, PRACH RO#2 corresponds to TRP#2, and PRACH RO#3 corresponds to TRP#3. If the terminal device uses PRACH RO#2 when performing random access, it can be determined that PRACH RO#2 corresponds to TRP#2 by searching the mapping relationship, so that TRP#2 can be determined as the first TRP.

It should be noted that the above examples are only an illustration, and cannot be used as a limitation on the correspondence relationship between the PRACH resources and the TRPs, the manner of determining the first TRP, and the like in the embodiments of the present disclosure.

In step 42, it is determined that a recovery beam for a PUCCH associated with the first TRP is a beam corresponding to the PRACH.

An association relationship between the PUCCH and the first TRP may be stipulated in a protocol or configured by a network device, which is not limited in the present disclosure.

For example, when the PRACH corresponds to beam #1, it may be determined that the recovery beam for the PUCCH associated with the first TRP is beam #1, and communication transmission with the network device is performed via beam #1, so as to minimize the impact on communication transmission.

It should be noted that the above example is only an illustration, and cannot be used as a limitation on the beam corresponding to the PRACH and the manner of determining the recovery beam for the PUCCH in the embodiments of the present disclosure.

By implementing the embodiment of the present disclosure, when the terminal device detects that the first TRP is in the beam failure state, it can determine that the TRP corresponding to the PRACH resource used by the terminal device is the first TRP according to the mapping relationship between the PRACH resources and the TRPs. Then, it can determine the recovery beam for the PUCCH associated with the first TRP is the beam corresponding to the PRACH, and communication transmission is performed via the determined recovery beam for the PUCCH. Therefore, the impact on communication transmission can be reduced as much as possible, and the quality and efficiency of communication transmission can be improved.

With reference to FIG. 5, FIG. 5 is a schematic flowchart of a method for beam recovery of a physical uplink control channel provided by an embodiment of the present disclosure. The method is performed by a terminal device. As shown in Figure 5, the method may include but not limited to the following steps.

In step 51, the terminal device detects that the first TRP is in a beam failure state, and transmits first indication information, in which the first indication information includes a first beam identity.

The identity style or presentation form of the first beam may be preset, for example, it may be a reference signal identity: 1, #1, etc., which is not limited in the present disclosure.

In step 52, it is determined that a recovery beam for the PUCCH is a first beam corresponding to the first beam identity.

Optionally, the correspondence relationship between the first beam identity and the first beam may be stipulated in a protocol or configured by a network device.

For example, the protocol stipulates that a first beam identity #1 corresponds to a first beam #1; a first beam identity #2 corresponds to a first beam #2, and so on. When the first beam identity included in the first indication information is #2, the terminal device may that determine the recovery beam for the PUCCH is the first beam #2 according to the correspondence relationship between the first beam identity and the first beam, and then perform communication transmission with a network device via the first beam #2, thereby minimizing the impact on communication transmission and improving the quality and efficiency of communication transmission.

By implementing the embodiment of the present disclosure, when the terminal device detects that the first TRP is in the beam failure state, it can transmit the first indication information, and then determine that the recovery beam for the PUCCH is the first beam corresponding to the first beam identity included in the first indication information, and perform communication transmission via the determined recovery beam for the PUCCH, thereby minimizing the impact on communication transmission, and improving the quality and efficiency of communication transmission.

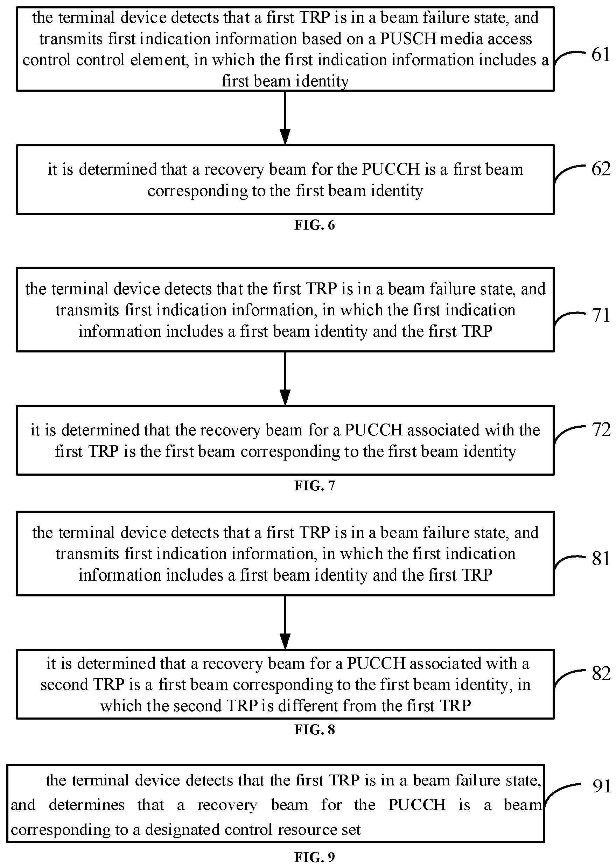

With reference to FIG. 6, FIG. 6 is a schematic flowchart of a method for beam recovery of a physical uplink control channel provided by an embodiment of the present disclosure. The method is performed by a terminal device. As shown in Figure 6, the method may include but not limited to the following steps.

In step 61, the terminal device detects that a first TRP is in a beam failure state, and transmits first indication information based on a PUSCH media access control control element, in which the first indication information includes a first beam identity.

The medium access control (MAC) is a physical medium mainly responsible for controlling and connecting a physical layer.

Optionally, a protocol stipulates or a network device may configure that, a specific bit (bit) is added in the PUSCH MAC control element (CE), and the first beam identity is represented through a value of the added bit. Therefore, after receiving the PUSCH MAC CE transmitted by the terminal device, the network device may obtain the first beam identity and the like according to the protocol and the value of the specific bit.

For example, the protocol stipulates that 4 bits are added to the MAC CE, and when the value of the 4 bits is 0001, it represents the first beam identity as #1; when its value is 0010, it represents the first beam ID as: #2; when its value it is 0011, the corresponding first beam identity is: #3, and so on. Therefore, the network device may obtain the first beam identity and the like according to the received MAC CE indication, which is not limited in the present disclosure.

In the embodiment of the present disclosure, the terminal device can transmit the first indication information to the network device through the MAC CE, so that the network device can obtain the first beam identity, so that the terminal device and the network device can maintain the same understanding of the first beam, thereby providing guarantee for a normal progress of communication transmission.

In step 62, it is determined that the recovery beam for the PUCCH is a first beam corresponding to the first beam identity.

It should be noted that, for the specific content and implementation of step 62, reference may be made to the descriptions of other embodiments of the present disclosure, which will not be repeated here.

By implementing the embodiment of the present disclosure, when the terminal device detects that the first TRP is in the beam failure state, it can transmit the first indication information based on the PUSCH MAC CE, determine that the recovery beam for the PUCCH is the first beam corresponding to the first beam identity included in the first indication information, and then perform communication transmission via the determined recovery beam for the PUCCH, thereby minimizing the impact on communication transmission and improving the quality and efficiency of communication transmission.

With reference to FIG. 7, FIG. 7 is a schematic flowchart of a method for beam recovery of a physical uplink control channel provided by an embodiment of the present disclosure. The method is performed by a terminal device. As shown in Figure 7, the method may include but not limited to the following steps.

In step 71, the terminal device detects that the first TRP is in a beam failure state, and transmits first indication information, in which the first indication information includes a first beam identity and the first TRP.

It can be understood that, in the embodiment of the present disclosure, the terminal device may also indicate the first TRP to the network device through the first indication information, so that the network device may obtain that the first TRP is in the beam failure state, and the two may maintain a consistent understanding, thereby providing guarantee for a normal progress of communication transmission.

It should be noted that, for the specific content and implementation of step 71, reference may be made to the descriptions of other embodiments of the present disclosure, which will not be repeated here.

In step 72, it is determined that the recovery beam for a PUCCH associated with the first TRP is the first beam corresponding to the first beam identity.

In the embodiment of the present disclosure, there may be an association relationship between the TRP and the PUCCH. Therefore, when the first TRP is in the beam failure state, it can be determined that the recovery beam for the PUCCH associated with the first TRP is the first beam corresponding to the first beam identity, and then the communication with the network device is performed via the determined recovery beam for the PUCCH. Therefore, the impact on communication transmission is minimized, and the quality and efficiency of communication transmission are guaranteed.

For example, the protocol stipulates that a first beam identity #1 corresponds to a first beam #1; a first beam ID #2 corresponds to a first beam #2, and so on. When the first beam identity included in the first indication information is #2, the terminal device may determine that the recovery beam for the PUCCH associated with the first TRP is the first beam #2 according to the correspondence relationship between the first beam identity and the first beam, then terminal device may communicate with the network device via the first beam #2.

Alternatively, the PUSCH MAC CE indicates that the first TRP is in the beam failure state, and the first beam identity of the first TRP is #1, so that it can be determined that the recovery beam for the PUCCH associated with the first TRP is the first beam #1.

Optionally, there may also be a second TRP different from the first TRP, so that when the second TRP is in the beam failure state, the PUCCH associated with the first TRP can be used to transmit a scheduling request of beam failure recovery of the second TRP, so as to the network device can be informed of the situation in time, thus providing guarantee for the normal progress of communication transmission.

It can be understood that, in this case, the relationship between PUCCH and TRP is as follows: PUCCH #i is associated with TRP #i, and the beam for PUCCH #i points to TRP #i, so when TRP #i is in the beam failure state, the terminal device may use any other TRP, such as a PUCCH associated with TRP#j, for communication transmission, in which i is different from j. This is not limited in the present disclosure.

By implementing the embodiment of the present disclosure, the terminal device can transmit the first indication information when detecting that the first TRP is in the beam failure state, and determine that the recovery beam for the PUCCH associated with the first TRP is the first beam corresponding to the first beam identity included in the first indication information, and then communication transmission can be performed via the determined recovery beam for the PUCCH. Therefore, the impact on communication transmission can be minimized, and the quality and efficiency of communication transmission can be improved.

With reference to FIG. 8. FIG. 8 is a schematic flowchart of a method for beam recovery of a physical uplink control channel provided by an embodiment of the present disclosure. The method is performed by a terminal device. As shown in Figure 8, the method may include but not limited to the following steps.

In step 81, the terminal device detects that a first TRP is in a beam failure state, and transmits first indication information, in which the first indication information includes a first beam identity and the first TRP.

It should be noted that, for the specific content and implementation of step 81, reference may be made to the descriptions of other embodiments of the present disclosure, which will not be repeated here.

In step 82, it is determined that a recovery beam for a PUCCH associated with a second TRP is a first beam corresponding to the first beam identity, in which the second TRP is different from the first TRP.

For example, a PUSCH MAC CE indicates that: a first TRP#1 is in the beam failure state, and a first beam identity of the first TRP#1 is #1, then it can be determined that the recovery beam for the PUCCH associated with TRP#2 is the first beam #1.

Optionally, in the embodiment of the present disclosure, there may also be the second TRP different from the first TRP, so that when the second TRP is in the beam failure state, the PUCCH associated with the second TRP can be used to transmit a beam failure recovery scheduling request, so that the network device can obtain the situation in time, thereby providing guarantee for a normal progress of communication transmission.

It can be understood that, in this case, the relationship between PUCCH and TRP is as follows: PUCCH#i is associated with TRP#i, and a beam for PUCCH#i points to TRP#j; thus, when TRP#i is in the beam failure state, the terminal device can use a PUCCH associated with TRP#i. However, since PUCCH#i associated with TRP#i points to TRP#j, when TRP#j is in the beam failure state, the beam for PUCCH#i of TRP#i needs to be updated, in which i is different from j. This is not limited in the present disclosure.

By implementing the embodiment of the present disclosure, the terminal device can transmit the first indication information when detecting that the first TRP is in the beam failure state, and determine that the recovery beam for the PUCCH associated with the second TRP is the first beam corresponding to the first beam identity included in the first indication information, and then communication transmission can be performed via the determined recovery beam for the PUCCH. Therefore, the impact on communication transmission can be minimized, and the quality and efficiency of communication transmission can be improved.

With reference to FIG. 9, FIG. 9 is a schematic flowchart of a method for beam recovery of a physical uplink control channel provided by an embodiment of the present disclosure. The method is performed by a terminal device. As shown in Figure 9, the method may include but not limited to the following steps.

In step 91, the terminal device detects that the first TRP is in a beam failure state, and determines that a recovery beam for the PUCCH is a beam corresponding to a designated control resource set.

There may be one or more control resource sets (CORESETs), and the designated control resource set may be any one of them, which is not limited in this disclosure.

For example, the terminal device detects that the first TRP is in the beam failure state, and the designated control resource set is CORESET#1. In a case that it corresponds to beam #2, the terminal device can determine that the recovery beam for the PUCCH is beam #2, and perform communication transmission with the network device via beam # 2. Therefore, the impact on communication transmission can be minimized, and the quality and efficiency of communication transmission can be improved.

By implementing the embodiment of the present disclosure, when the terminal device detects that the first TRP is in the beam failure state, it can determine that the recovery beam for the PUCCH is the beam corresponding to the designated control resource set, and then perform communicate transmission via the determined recovery beam for the PUCCH. Therefore, the impact on communication transmission can be minimized, and the quality and efficiency of communication transmission can be improved.

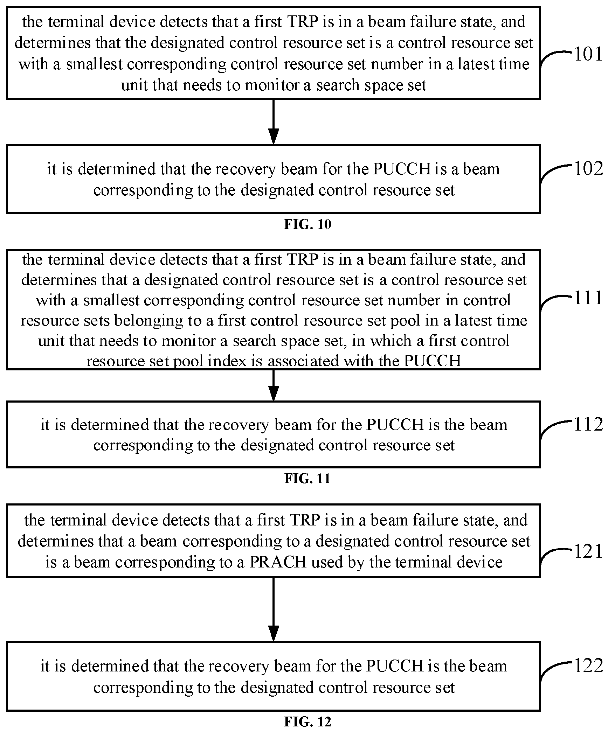

With reference to FIG. 10, FIG. 10 is a schematic flowchart of a method for beam recovery of a physical uplink control channel provided by an embodiment of the present disclosure. The method is performed by a terminal device. As shown in Figure 10, the method may include but not limited to the following steps.

In step 101, the terminal device detects that a first TRP is in a beam failure state, and determines that the designated control resource set is a control resource set with a smallest corresponding control resource set number in a latest time unit that needs to monitor a search space set.

The time unit may be a slot, a mini slot, etc., which is not limited in the present disclosure.

In addition, there may be one or more search space sets (SS sets), and each SS set may have one or more search spaces, which is not limited in this disclosure.

It can be understood that one SS set may correspond to one CORESET, and one CORESET may correspond to one or more SS sets.

In addition, the style or presentation form of the control resource set number can be predefined, for example, it can be CORESET 1, CORESET#1, etc., which is not limited in the present disclosure.

For example, the time unit is a slot, and there may be one CORESET in the latest slot that needs to monitor the SS set, then the CORESET is the designated control resource set.

Alternatively, there may be multiple CORESETs in the latest slot that needs to monitor the SS set, and then it can be determined that the designated control resource set is the CORESET with the smallest number among them by comparing the number of each CORESET.

It should be noted that, the above example is only an illustration, and cannot be used as a limitation on the number of CORESETs in the embodiments of the present disclosure.

In step 102, it is determined that the recovery beam for the PUCCH is a beam corresponding to the designated control resource set.

It should be noted that, for the specific content and implementation of step 102, reference may be made to the descriptions of other embodiments of the present disclosure, which will not be repeated here.

By implementing the embodiment of the present disclosure, when the terminal device detects that the first TRP is in the beam failure state, it can determine that the designated control resource set is the control resource set with the smallest corresponding control resource set number in the latest time unit that needs to monitor the search space set, then it determines that the recovery beam for the PUCCH is the beam corresponding to the designated control resource set, and performs communication transmission via the determined recovery beam for the PUCCH. Therefore, the impact on communication transmission can be minimized, and the quality and efficiency of communication transmission can be improved.

With refer to FIG. 11, FIG. 11 is a schematic flowchart of a method for beam recovery of a physical uplink control channel provided by an embodiment of the present disclosure. The method is performed by a terminal device. As shown in Figure 11, the method may include but not limited to the following steps.

In step 111, the terminal device detects that a first TRP is in a beam failure state, and determines that a designated control resource set is a control resource set with a smallest corresponding control resource set number in control resource sets belonging to a first control resource set pool in a latest time unit that needs to monitor a search space set, in which a first control resource set pool index is associated with the PUCCH.

The time unit may be a slot, a mini-slot, etc., which is not limited in the present disclosure.

In addition, there may be one CORESET or multiple CORESETs in the first control resource set pool (CORESET pool), which is not limited in this disclosure.

For example, the time unit is the slot, and the CORESETs corresponding to the slot that needs to monitor the space set are CORESET#1, CORESET#2, CORESET#3, CORESET#4, CORESET#5, and the CORESETs belong to the first control resource set pools are CORESET#2, CORESET#4 and CORESET#5. When CORESET#2 is the CORESET with the smallest number in the first control resource set pool, then it can be determined that the designated CORESET is CORESET#2.

It should be noted that the above example is only for illustration, and cannot be used as a limitation on the time unit, the first CORESET pool, etc. in the embodiments of the present disclosure.

Optionally, the first control resource set pool index associated with the PUCCH may be determined according to configuration information of an association relationship between the PUCCHs and the control resource set pool indexes (CORESET pool indexes).

It can be understood that, the configuration information of the association relationship between the PUCCHs and the CORESET pool indexes may be stipulated by the protocol, or configured by the network device, which is not limited in the present disclosure.

For example, the protocol stipulates that the CORESET pool index corresponding to the PUCCH configured to send a scheduling request is CORESET pool index#1, and the CORESET pool index corresponding to the PUCCH configured to send a non-scheduling request is CORESET pool index#2. In a case that the PUCCH corresponding to the current first TRP is the PUCCH configured to send the scheduling request, it may be determined that the first CORESET pool index associated with the PUCCH is CORESET pool index#1.

It should be noted that, the above example is only an illustration, and cannot be used as a limitation on the CORESET pool index and its association relationship with the PUCCH in the embodiments of the present disclosure.

Optionally, the first control resource associated with the PUCCH may also be determined according to configuration information of an association relationship between the PUCCHs and beam failure detection reference signal (BFD RS) set indexes.

It can be understood that there may also be a correspondence relationship between the BFD RS set indexes and the CORESET pool indexes. The configuration information of the association relationship between the PUCCHs and the BFD RS set indexes and/or the correspondence relationship between the BFD RS set indexes and the CORESET pool indexes may be stipulated in the protocol, or may also be configured by the network device, which is not limited in the present disclosure.

For example, the protocol stipulates that: a BFD RS set index corresponding to a PUCCH configured to transmit a scheduling request is BFD RS set index#1; a BFD RS set index corresponding to a PUCCH configured to transmit a BFR scheduling request is BFD RS set index#2; and BFD RS set index#1 corresponds to CORESET pool index#1, and BFD RS set index#2 corresponds to CORESET pool index#2. When the PUCCH is the PUCCH configured to transmit the scheduling request, it may be determined that the first CORESET pool index associated with the PUCCH is CORESET pool index#1.

It should be noted that the above example is only for illustration, and cannot be used as a limitation on the CORESET pool index, the BFD RS set index and the association relationship with the PUCCH in the embodiments of the present disclosure.

In step 112, it is determined that the recovery beam for the PUCCH is the beam corresponding to the designated control resource set.

It should be noted that, for the specific content and implementation of step 112, reference may be made to the descriptions of other embodiments of the present disclosure, which will not be repeated here.

By implementing the embodiment of the present disclosure, when the terminal device detects that the first TRP is in the beam failure state, it can determine that the designated control resource set is the control resource set with the smallest corresponding control resource set number in the control resource sets belonging to the first control resource set pool in the latest time unit that needs to monitor the search space set, and determine the recovery beam for the PUCCH is the beam corresponding to the designated control resource set, and then communication transmission can be performed via the determined recovery beam for the PUCCH. Therefore, the impact on communication transmission can be minimized, and the quality and efficiency of communication transmission can be improved.

With reference to FIG. 12, FIG. 12 is a schematic flowchart of a method for beam recovery of a physical uplink control channel provided by an embodiment of the present disclosure. The method is performed by a terminal device. As shown in Figure 12, the method may include but not limited to the following steps.

In step 121, the terminal device detects that a first TRP is in a beam failure state, and determines that a beam corresponding to a designated control resource set is a beam corresponding to a PRACH used by the terminal device.

For example, when the terminal device detects that the first TRP is in the beam failure state, normal communication may not be performed at this time, thereby affecting communication transmission. Then the terminal device can use the random access process to perform beam recovery. If the beam used by the terminal device for the PRACH is beam #1, it can be determined that the beam corresponding to the designated CORESET is beam #1.

It should be noted that the above example is only an illustration, and cannot be used as a limitation on the beam corresponding to the PRACH and the manner of determining the recovery beam for the PUCCH in the embodiments of the present disclosure.

It should be noted that the designated control resource set may be stipulated according to a protocol or may be determined by a network device, or may also be determined by means of other embodiments of the present disclosure, which is not limited in the present disclosure.

In step 122, it is determined that the recovery beam for the PUCCH is the beam corresponding to the designated control resource set.

It should be noted that, for the specific content and implementation of step 122, reference may be made to the descriptions of other embodiments of the present disclosure, which will not be repeated here.

By implementing the embodiment of the present disclosure, when the terminal device detects that the first TRP is in the beam failure state, it can determine that the beam corresponding to the designated control resource set is the beam corresponding to the PRACH used by the terminal device, and determine that the recovery beam for the PUCCH is the beam corresponding to the designated control resource set, and then communication transmission can be performed via the determined recovery beam for the PUCCH. Therefore, the impact on communication transmission can be minimized, and the quality and efficiency of communication transmission can be improved.

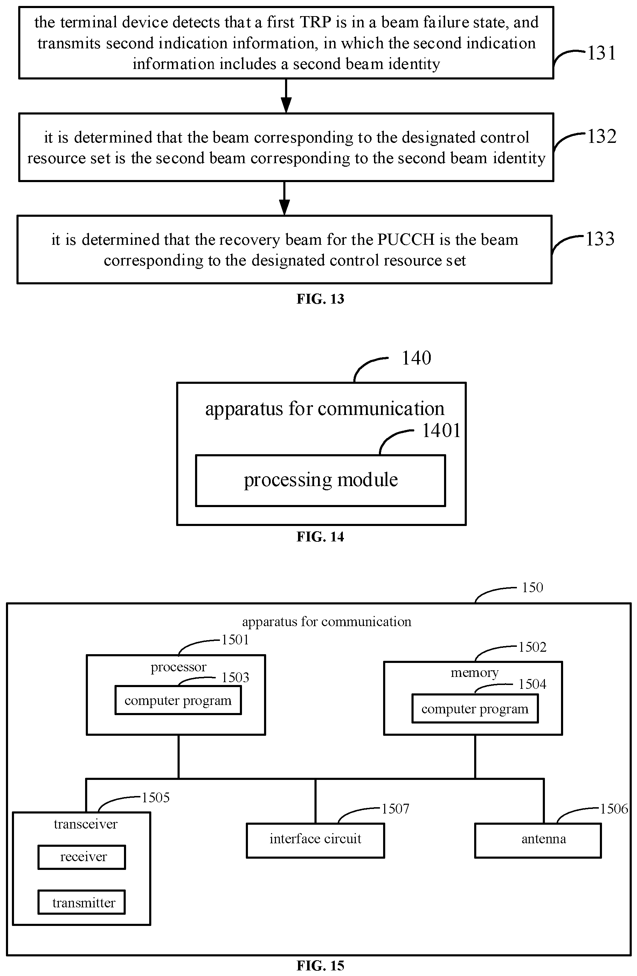

With reference to FIG. 13, FIG. 13 is a schematic flowchart of a method for beam recovery of a physical uplink control channel provided by an embodiment of the present disclosure. The method is performed by a terminal device. As shown in Figure 13, the method may include but not limited to the following steps.

In step 131, the terminal device detects that a first TRP is in a beam failure state, and transmits second indication information, in which the second indication information includes a second beam identity.

The identification style or presentation form of the second beam may be predefined, for example, it may be a reference signal identity: 1, #1, A, etc., which is not limited in the present disclosure.

In the embodiment of the present disclosure, the terminal device may indicate the second beam identity to the network device through the second indication information, so that the terminal device and the network device may maintain the same understanding of the second beam, thus providing guarantee for normal communication transmission.

Optionally, the second indication information may include at least one of: a cell identity in the beam failure state; a TRP identity in the beam failure state; a second beam identity; or a TRP identity and/or a cell identity associated with the second beam identity.

Optionally, the association relationship between the second beam identity, and the TRP identity and the cell identity may be stipulated in a protocol or configured by a network device, which is not limited in the present disclosure.

Optionally, the TRP identity may include at least one of: a TRP identity number, a control resource set pool index identity, and a beam failure detection reference signal set identity.

The style or presentation form of the TRP identity may be predefined, for example, it can be: 1, #2, etc., which is not limited in the present disclosure.

For example, the second indication information indicates the network device that: the TRP in the beam failure state is identified as TRP #1 and the second beam identity is #1. Then, after receiving the second indication information, the network device may know that TRP #1 is in the beam failure state and that the second beam identity is #1. Therefore, the terminal device and the network device may maintain the same understanding of the TRP in the beam failure state and the second beam, thus providing a guarantee for the normal communication transmission.

Alternatively, the second indication information indicates that: the second beam identity is #2, and the TRP identity associated with it is TRP#2, and the cell identity associated with it is cell#1. Then, after receiving the second indication information, the network device may know that the second beam identity is #2 and that the TRP #2 and cell #1 are associated with it. Therefore, the terminal device and the network device may keep consistent with respect to the second beam and the TRP identity and/or cell identity associated with the second beam, thus providing guarantee for normal communication transmission.
be noted that the above example is only an illustration, and cannot be used as a limitation on the content indicated by the second indication information in the embodiments of the present disclosure.

Optionally, the terminal device may also transmit the second indication information based on the PUSCH MAC CE, in which the second indication information includes the second beam identity.

For example, it may be stipulated in a protocol or configured by a network device that: a specific bit is added to the PUSCH MAC CE, and the value of the added bit is configured to represent the second beam identity. Therefore, after receiving the PUSCH MAC CE transmitted by the terminal device, the network device may obtain the second beam identity and the like according to the protocol and the value of the specific bit, which is not limited in the present disclosure.

In step 132, it is determined that the beam corresponding to the designated control resource set is the second beam corresponding to the second beam identity.

Optionally, the correspondence relationship between the second beam identity and the second beam may be stipulated in a protocol or configured by a network device.

For example, the protocol stipulates that the second beam ID #1 corresponds to the second beam #1, the second beam ID #2 corresponds to the second beam #2, and so on. In a case that the second beam identity included in the second indication information is #1, the terminal device may determine that the beam corresponding to the designated control resource set is the second beam #2 according to the correspondence relationship between the second beam identity and the second beam, and so on, which is not limited in the present disclosure.

It should be noted that the designated control resource set may be stipulated according to a protocol or may be determined by a network device, or may also be determined by means of other embodiments of the present disclosure, which is not limited in the present disclosure.

In step 133, it is determined that the recovery beam for the PUCCH is the beam corresponding to the designated control resource set.

Optionally, the terminal device may also transmit the second indication information based on the PUSCH MAC CE, in which the second indication information includes the second beam identity and the TRP identity.

Optionally, the TRP identity may include at least one of: TRP identification number, a control resource set pool index identity, or a beam failure detection reference signal set identity.

For example, when the TRP identity is the CORESET pool index identity, the beam corresponding to the designated CORESET is the second beam indicated by the PUSCH MAC CE.

For example, in a case that the PUSCH MAC CE indicates the second beam #1 of TRP #1, then the recovery beam for the PUCCH on the CORESET corresponding to TRP #1 is the second beam #1; in a case that the PUSCH MAC CE indicates the second beam #2 of TRP #2, then the recovery beam for the PUCCH on the CORESET corresponding to TRP #2 is the second beam #2.

Optionally, it is also possible that the second beam is not found on a certain TRP, and the PUSCH MAC CE indicates that the second beam does not exist.

Optionally, the correspondence relationship between TRPs and CORESETs may be associated by CORESET pool indexes, or may also be associated by BFDRS set indexes, or may also be associated by CORESET pool indexes and BFDRS set IDs, etc., which is not limited in this disclosure.

It can be understood that the designated CORESET may be the one with the smallest index in the CORESET pool index, or the one with the largest index, or a specific one, such as the third one, etc. This is not limited.

For example, the protocol stipulates that TRP#i corresponds to CORESET pool index#i one-to-one, and each CORESET belongs to one of the CORESET pool indexes. In a case that the second beam identity indicated by the PUSCH MAC CE is #3, it corresponds to TRP#3, TRP#3 corresponds to CORESET pool index#2, and the designated control resource set is CORESET#2 in the control resource set pool, then it can be determined that the beam corresponding to CORESET#2 is the second beam #3. In addition, in a case that CORESET#2 corresponds to PUCCH#1, it can be determined that the recovery beam for PUCCH#1 is the second beam#3.

Alternatively, there is also a one-to-one correspondence relationship between TRP#i and BFD RS set#i, and BFD RS set#i can also correspond to CORESET pool index#i, and each CORESET belongs to one of the CORESET pool indexes.

For example, the second beam identity indicated by the PUSCH MAC CE is #1, which corresponds to TRP#1, TRP#1 corresponds to BFD RS set#1, and BFD RS set#1 corresponds to CORESET pool index#1, so it can be determined that the beam corresponding to CORESET#i in CORESET pool index#1 is the second beam #1. In addition, when CORESET#i corresponds to PUCCH#2, it can be determined that the recovery beam for PUCCH#2 is the second beam#1.

It should be noted that, the foregoing example is only an illustration, and cannot be used as a limitation on the second indication information, the TRP identity, and the like in the embodiments of the present disclosure.

By implementing the embodiment of the present disclosure, when the terminal device detects that the first TRP is in the beam failure state, it can transmit the second indication information, and determine that the beam corresponding to the designated control resource set is the second beam identity included in the second indication information, then it can be determined that the recovery beam for the PUCCH is the beam corresponding to the designated control resource set, and communication transmission can be performed via the determined recovery beam for the PUCCH. Therefore, the impact on communication transmission can be minimized, and the quality and efficiency of communication transmission can be improved.

In the above embodiments provided in the present disclosure, the methods provided in the embodiments of the present disclosure are introduced from the perspective of a terminal device. In order to realize the various functions in the methods provided by the above embodiments of the present disclosure, the terminal device may include a hardware structure and a software module, and realize the above-mentioned functions in the form of a hardware structure, a software module, or a combination of a hardware structure and a software module. A certain function among the above-mentioned functions may be implemented in the form of a hardware structure, a software module, or a combination of a hardware structure and a software module.

With reference to FIG. 14, FIG. 14 is a schematic structural diagram of an apparatus for communication 140 provided by an embodiment of the present disclosure. The apparatus for communication 140 shown in the figure may include a processing module 1401.

A transceiver module may include a transmitting module and/or a receiving module, the transmitting module is configured to realize a transmission function, the receiving module is configured to realize a receiving function, and the transceiver module can realize the transmission function and/or the receiving function.

It can be understood that the apparatus for communication 140 may be a terminal device, may also be an apparatus in the terminal device, and may also be an apparatus that can be matched and used with the terminal device.

The apparatus for communication includes:

A processing module 1401, configured for the apparatus to detect that a first transmission and reception point TRP is in a beam failure state, and to determine a recovery beam for a physical uplink control channel PUCCH.

Optionally, the processing module 1401 is specifically configured to:
determine that the recovery beam for the PUCCH is a beam corresponding to a physical random access channel PRACH.

Optionally, the processing module 1401 is further configured to:
determine that the TRP corresponding to a PRACH resource used by the apparatus is the first TRP according to a mapping relationship between the PRACH resources and the TRPs.

Optionally, the apparatus 140 further includes:
a transceiver module, configured to transmit first indication information, in which the first indication information includes a first beam identity.

The processing module 1401 is further configured to determine that the recovery beam for the PUCCH is a first beam corresponding to the first beam identity.

Optionally, the transceiver module is specifically configured to:
transmit the first indication information based on a physical uplink shared channel PUSCH medium access control MAC control element CE.

Optionally, the first indication information further includes the first TRP, and the processing module is specifically configured to:
determine that a recovery beam for a PUCCH associated with the first TRP is the first beam corresponding to the first beam identity.

Optionally, when a second TRP is in the beam failure state, the PUCCH associated with the first TRP is used to transmit a beam failure recovery scheduling request, in which the second TRP is different from the first TRP.

Optionally, the first indication information further includes the first TRP, and the processing module 1401 is further specifically configured to:
determine that a recovery beam for a PUCCH associated with a second TRP is the first beam corresponding to the first beam identity, in which the second TRP is different from the first TRP.

Optionally, when the second TRP is in the beam failure state, the PUCCH associated with the second TRP is used to transmit a beam failure recovery scheduling request.

Optionally, the processing module 1401 is further specifically configured to:
determine that the recovery beam for the PUCCH is a beam corresponding to a designated control resource set.

Optionally, the processing module 1401 is further configured to:
determine that the designated control resource set is a control resource set with a smallest corresponding control resource set number in a latest time unit that needs to monitor a search space set;
   or,
determine that the recovery beam for the PUCCH is a control resource set with a smallest corresponding control resource set number in control resource sets belonging to a first control resource set pool in a latest time unit that needs to monitor a search space set, in which a first control resource set pool index is associated with the PUCCH.

Optionally, the processing module 1401 is further configured to:
determine the first control resource set pool index associated with the PUCCH according to configuration information of an association relationship between PUCCHs and control resource set pool indexes; or,
determine the first control resource set pool index associated with the PUCCH according to configuration information of an association relationship between PUCCHs and beam failure detection reference signal set indexes.

Optionally, the processing module 1401 is specifically configured to:
determine that the beam corresponding to the designated control resource set is a beam corresponding to a physical random access channel PRACH used by the apparatus.

Optionally, the apparatus further includes:
a transceiver module, configured to transmit second indication information, in which the second indication information includes a second beam identity.

The processing module 1401 is configured to determine the beam corresponding to the designated control resource set as a second beam corresponding to the second beam identity.

Optionally, the second indication information includes at least one of:
a cell identity in the beam failure state;
a TRP identity in the beam failure state;
a second beam identity; or
a TRP identity and/or a cell identity associated with the second beam identity.

Optionally, the TRP identity includes at least one of: a TRP identification number, a control resource set pool index identity, and a beam failure detection reference signal set identity.

Optionally, the PUCCH includes at least one of:
a PUCCH configured to transmit a scheduling requests;
a PUCCH configured to transmit a beam failure recovery scheduling request; or,
a PUCCH configured to transmit a non-scheduling request.

For the functions and specific implementation principles of the above-mentioned modules in the embodiment of the present disclosure, reference may be made to the above-mentioned method embodiments, which will not be repeated here.

The apparatus for communication provided in the present disclosure can determine the recovery beam for the PUCCH when detecting that the first TRP is in the beam failure state, and then perform communication transmission via the determined recovery beam for the PUCCH. Therefore, the impact on communication transmission can be minimized, and the quality and efficiency of communication transmission can be improved.

With refer to FIG. 15, FIG. 15 is a schematic structural diagram of another apparatus for communication 150 provided by an embodiment of the present disclosure. The apparatus for communication 150 may be a terminal device, or may be a chip, a chip system, or a processor that supports the terminal device to implement the foregoing methods. The apparatus can be configured to implement the methods described in the above method embodiments, and for details, refer to the descriptions in the above method embodiments.

The apparatus for communications 150 may include one or more processors 1501. The processor 1501 may be a general purpose processor or a special purpose processor or the like. For example, it can be a baseband processor or a central processing unit. The baseband processor can be configured to process a communication protocol and communication data, and the central processing unit can be configured to control the apparatus for communication (such as a base station, a baseband chip, a terminal device, a terminal device chip, a DU or CU, etc.), to execute computer programs, and to process data for computer programs.

Optionally, the apparatus for communication 150 may further include one or more memories 1502, on which a computer program 1504 may be stored, and the processor 1501 executes the computer program 1504, so that the apparatus for communication 150 executes the methods described in the foregoing method embodiments. Optionally, data may also be stored in the memory 1502. The apparatus for communication 150 and the memory 1502 can be set separately or integrated together.

Optionally, the apparatus for communication 150 may further include a transceiver 1505 and an antenna 1506. The transceiver 1505 may be called as a transceiver unit, a transceiving machine, or a transceiver circuit, etc., and is configured realize a transceiver function. The transceiver 1505 may include a receiver and a transmitter, and the receiver may be called as a receiving machine or a receiving circuit configured to realize a receiving function; the transmitter may be called as a transmitting machine or a transmitting circuit configured to realize a transmitting function.

Optionally, the apparatus for communication 150 may further include one or more interface circuits 1507. The interface circuit 1507 is configured to receive code instructions and transmit them to the processor 1501. The processor 1501 executes the code instructions to enable the apparatus for communication 150 to perform the methods described in the foregoing method embodiments.

The apparatus for communication 150 is a terminal device: the processor 1501 is configured to execute step 21 in FIG. 2; step 31 in FIG. 3; step 32 in FIG. 3; step 41 in FIG. 4; step 42 in FIG. 4; step 52 in Figure 5; step 62 in Figure 6; step 72 in Figure 7; step 82 in Figure 8; step 91 in Figure 9; step 101 in Figure 10; step 111 in Figure 11; step 112 in FIG. 11 ; step 121 in FIG. 12 ; or step 132 in FIG. 13. The transceiver 1505 is configured to execute step 51 in FIG. 5; step 61 in FIG. 6; step 71 in FIG. 7; step 81 in FIG. 8; or step 131 in FIG. 13.

In an implementation, the processor 1501 may include a transceiver configured to implement receiving and transmitting functions. For example, the transceiver may be a transceiver circuit, or an interface, or an interface circuit. The transceiver circuit, interface or interface circuit configured to realize the receiving and transmitting functions can be separated or integrated together. The above-mentioned transceiver circuit, interface or interface circuit may be used for reading and writing code/data, or the above-mentioned transceiver circuit, interface or interface circuit may be used for signal transmission or transfer.

In an implementation, the processor 1501 may store a computer program 1503, and the computer program 1503 runs on the processor 1501 to enable the apparatus for communication 150 to execute the methods described in the foregoing method embodiments. The computer program 1503 may be solidified in the processor 1501, and in this case, the processor 1501 may be implemented by hardware.

In an implementation, the apparatus for communication 150 may include a circuit, and the circuit may implement the function of sending or receiving or communication in the foregoing method embodiments. The processor and transceiver described in the present disclosure may be implemented on an integrated circuit (IC), an analog IC, a radio frequency integrated circuit (RFIC), a mixed-signal IC, an application specific integrated circuit (ASIC), a printed circuit board ( PCB), an electronic device, etc. The processor and transceiver can also be fabricated using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The apparatus for communication described in the above embodiments may be a terminal device, but the scope of the apparatus for communication described in the present disclosure is not limited thereto, and the structure of the apparatus for communication may not be limited by FIG. 15. The apparatus for communication may be a stand-alone device or may be part of a larger device. For example the apparatus for communication may be:
(1) a stand-alone integrated circuit IC, or a chip, or a chip system or a subsystem;
(2) a set of one or more ICs, optionally, the set of ICs may also include storage components configured to store data and computer programs;
(3) an ASIC, such as Modem;
(4) a module that can be embedded in other devices;
(5) a receiver, a terminal device, an intelligent terminal device, a cellular phone, a wireless device, a handset, a mobile unit, a vehicle device, a network device, a cloud device, an artificial intelligence device, etc.;
(6) Others and so on.

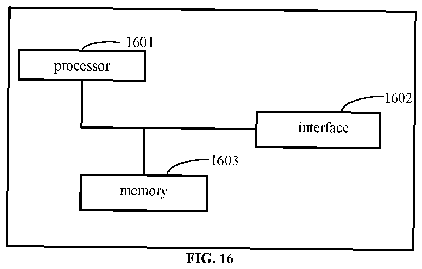

For the case where the apparatus for communication may be a chip or a chip system, refer to the schematic structural diagram of the chip shown in FIG. 16. The chip shown in FIG. 16 includes a processor 1601 and an interface 1602.

The number of processors 1601 may be one or more, and the number of interfaces 1602 may be more than one.

For the case where the chip is used to implement the functions of the terminal device in the embodiments of the present disclosure:
the interface 1602 is configured to execute step 51 in FIG. 5; step 61 in FIG. 6; step 71 in FIG. 7; step 81 in FIG. 8 ; or step 131 in FIG. 13.

Optionally, the chip further includes a memory 1603 configured to store necessary computer programs and data.

Those skilled in the art can also understand that various illustrative logical blocks and steps listed in the embodiments of the present disclosure can be implemented by electronic hardware, computer software, or a combination of both. Whether such functions are implemented by hardware or software depends on the specific application and overall system design requirements. Those skilled in the art may use various methods to implement the described functions for each specific application, but such implementation should not be understood as exceeding the protection scope of the embodiments of the present disclosure.

Embodiments of the present disclosure also provide a system for beam recovery of a physical uplink control channel, the system includes the apparatus for communication as the terminal device in the embodiment of FIG. 14, or the system includes the apparatus for communication as the terminal device in the embodiment of FIG. 15.

The present disclosure also provides a computer-readable storage medium on which instructions are stored, and when the instructions are executed by a computer, the functions of any one of the above method embodiments are realized.

The present disclosure also provides a computer program product, which implements the functions of any one of the above method embodiments when the computer program product is executed by a computer.

In the above embodiments, all or part of them may be implemented by software, hardware, firmware or any combination thereof. When implemented using software, it may be implemented in whole or in part in the form of a computer program product. The computer program product includes one or more computer programs. When the computer program is loaded and executed on the computer, all or part of the processes or functions according to the embodiments of the present disclosure will be generated. The computer can be a general purpose computer, a special purpose computer, a computer network, or other programmable devices. The computer program can be stored in or transmitted from one computer-readable storage medium to another computer-readable storage medium, for example, the computer program can be transmitted from a website, computer, server or data center to another website site, computer, server or data center by wired (such as coaxial cable, optical fiber, digital subscriber line (DSL)) or wireless (such as infrared, wireless, microwave, etc.). The computer-readable storage medium may be any available medium that can be accessed by a computer, or a data storage device such as a server or a data center integrated with one or more available media. The available medium may be a magnetic medium (for example, a floppy disk, a hard disk, a magnetic tape), an optical medium (for example, a high-density digital video disc (DVD)), or a semiconductor medium (for example, a solid state disk (SSD)) etc.

Those of ordinary skill in the art can understand that the first, second, and other numbers involved in the present disclosure are only for convenience of description, and are not used to limit the scope of the embodiments of the present disclosure, and also indicate the sequence.

At least one in the present disclosure can also be described as one or more, and a plurality can be two, three, four or more, and the present disclosure is not limited. In the embodiments of the present disclosure, for a technical feature, the technical feature is distinguished by "first", "second", "third", "A", "B", "C" and "D", etc. The technical features described in the "first", "second", "third", "A", "B", "C" and "D" have no sequence or order of magnitude among the technical features described.

The correspondence relationship shown in each table in the present disclosure may be configured or predefined. The values of the information in each table are just examples, and may be configured as other values, which are not limited in the present disclosure. When configuring the correspondence relationship between the information and each parameter, it is not necessarily required to configure all the correspondence relationships shown in the tables. For example, in the table in the present disclosure, the correspondence relationship shown in some rows may not be configured. For another example, appropriate deformation adjustments can be made based on the above table, for example, splitting, merging, and so on. The names of the parameters shown in the titles of the above tables may also adopt other names understandable by the apparatus for communication, and the values or representations of the parameters may also be other values or representations understandable by the apparatus for communication. When the above tables are implemented, other data structures can also be used, for example, arrays, queues, containers, stacks, linear tables, pointers, linked lists, trees, graphs, structural blocks, classes, heaps, hash tables or hash tables can be used.

Predefinition in the present disclosure can be understood as definition, definition in advance, storage, prestorage, pre negotiation, preconfiguration, curing, or prefiring.

Those skilled in the art can appreciate that the units and algorithm steps of the examples described in conjunction with the embodiments disclosed herein can be implemented by electronic hardware, or a combination of computer software and electronic hardware. Whether these functions are executed by hardware or software depends on the specific application and design constraints of the technical solution. A skilled one may implement the described functions using different methods for each particular application, but such implementation should not be considered as exceeding the scope of the present disclosure.

Those skilled in the art can clearly understand that for the convenience and brevity of the description, the specific working process of the above-described system, device and unit can refer to the corresponding process in the foregoing method embodiments, which will not be repeated here.

The above is only a specific implementation of the present disclosure, but the scope of protection of the present disclosure is not limited thereto. Anyone skilled in the art can easily think of changes or substitutions within the technical scope of the present disclosure, which should fall within the protection scope of the present disclosure. Therefore, the protection scope of the present disclosure should be determined by the protection scope of the claims.

The following are preferred aspects of the present disclosure:
Aspect 1. A method for beam recovery of a physical uplink control channel, PUCCH, performed by a terminal device, comprising:
   detecting, by the terminal device, that a first transmission and reception point, TRP, is in a beam failure state; and
   determining a recovery beam for the PUCCH (21).
Aspect 2. The method according to aspect 1, wherein determining the recovery beam for the PUCCH comprises:
   determining that the recovery beam for the PUCCH is a beam corresponding to a physical random access channel, PRACH, (31)
   wherein the method further comprises:
   determining that a TRP corresponding to a PRACH resource used by the terminal device is the first TRP according to a mapping relationship between PRACH resources and TRPs (41).
Aspect 3. The method according to aspect 1, wherein determining the recovery beam for the PUCCH comprises:
   transmitting first indication information, wherein the first indication information comprises a first beam identity (51); and
   determining that the recovery beam for the PUCCH is a first beam corresponding to the first beam identity (52; 62).
Aspect 4. The method according to aspect 3, wherein transmitting the first indication information comprises:
   transmitting the first indication information based on a physical uplink shared channel, PUSCH, medium access control, MAC, control element, CE (61).
Aspect 5. The method according to aspect 3 or 4, wherein the first indication information further comprises the first TRP, and determining that the recovery beam for the PUCCH is the first beam corresponding to the first beam identity comprises:
   determining that a recovery beam for a PUCCH associated with the first TRP is the first beam corresponding to the first beam identity (72),
   wherein in a case that a second TRP is in the beam failure state, using the PUCCH associated with the first TRP to transmit a beam failure recovery scheduling request, wherein the second TRP is different from the first TRP;
      or,
   determining that a recovery beam for a PUCCH associated with a second TRP is the first beam corresponding to the first beam identity, wherein the second TRP is different from the first TRP (82),
   wherein in a case that the second TRP is in the beam failure state, using the PUCCH associated with the second TRP to transmit a beam failure recovery scheduling request.
Aspect 6. The method according to aspect 1, wherein determining the recovery beam for the PUCCH comprises:
   determining that the recovery beam for the PUCCH is a beam corresponding to a designated control resource set (91; 102; 112; 122; 133).
Aspect 7. The method according to aspect 6, further comprising:
   determining that the designated control resource set is a control resource set with a smallest corresponding control resource set number in a latest time unit that needs to monitor a search space set (101);
      or,
   determining that the designated control resource set is a control resource set with a smallest corresponding control resource set number in control resource sets belonging to a first control resource set pool in a latest time unit that needs to monitor a search space set, wherein a first control resource set pool index is associated with the PUCCH (111),
   wherein the method further comprises:
      determining the first control resource set pool index associated with the PUCCH according to configuration information of an association relationship between PUCCHs and control resource set pool indexes; or
      determining the first control resource set pool index associated with the PUCCH according to configuration information of an association relationship between PUCCHs and beam failure detection reference signal set indexes.
Aspect 8. The method according to aspect 6, further comprising:
   determining that the beam corresponding to the designated control resource set is a beam corresponding to a PRACH used by the terminal device (121).
Aspect 9. The method according to aspect 6, further comprising:
   transmitting second indication information, wherein the second indication information comprises a second beam identity (131); and
   determining that the beam corresponding to the designated control resource set is a second beam corresponding the second beam identity (132),
   wherein the second indication information comprises at least one of:
      a cell identity in the beam failure state;
      a TRP identity in the beam failure state;
      a second beam identity; or
      a TRP identity and/or a cell identity associated with the second beam identity,
      wherein the TRP identity comprises at least one of:
      a TRP identification number,
      a control resource set pool index identity, or
      a beam failure detection reference signal set identity.
Aspect 10. The method according to any one of aspects 1-9, wherein the PUCCH comprises at least one of:
   a PUCCH configured to transmit a scheduling request;
   a PUCCH configured to transmit a beam failure recovery scheduling request; or
   a PUCCH configured to transmit a non-scheduling request.
Aspect 11. An apparatus (140) for communication, comprising:
   a processing module (1401), configured for the apparatus to detect that a first transmission and reception point, TRP, is in a beam failure state, and to determine a recovery beam for a physical uplink control channel, PUCCH.
Aspect 12. The apparatus (140) according to aspect 11, wherein the processing module (1401) is specifically configured to:
   determine that the recovery beam for the PUCCH is a beam corresponding to a physical random access channel, PRACH,
   wherein the processing module (1401) is further configured to:
      determine that a TRP corresponding to a PRACH resource used by the apparatus is the first TRP according to a mapping relationship between PRACH resources and TRPs.
Aspect 13. The apparatus (140) according to aspect 11, further comprising:
   a transceiver module, configured to transmit first indication information, wherein the first indication information comprises a first beam identity;
   wherein the processing module (1401) is further configured to determine that the recovery beam for the PUCCH is a first beam corresponding to the first beam identity.
Aspect 14. The apparatus (140) according to aspect 11, wherein the transceiver module is specifically configured to:
   transmit the first indication information based on a physical uplink shared channel, PUSCH, medium access control, MAC, control element, CE.
Aspect 15. A computer-readable storage medium having stored thereon instructions that, when executed by a processor of a terminal device, cause the terminal device to perform the method for beam recovery of a physical uplink control channel, PUCCH, according to any one of aspects 1 to 10.

Preferred further aspects are:
1. A method for beam recovery of a physical uplink control channel, performed by a terminal device, comprising: detecting, by the terminal device, that a first transmission and reception point TRP is in a beam failure state; and determining a recovery beam for the physical uplink control channel PUCCH.
2. The method according to further aspect 1, wherein determining the recovery beam for the physical uplink control channel PUCCH comprises: determining that the recovery beam for the PUCCH is a beam corresponding to a physical random access channel PRACH.
3. The method according to further aspect 2, further comprising: determining that a TRP corresponding to a PRACH resource used by the terminal device is the first TRP according to a mapping relationship between PRACH resources and TRPs.
4. The method according to further aspect 1, wherein determining the recovery beam for the physical uplink control channel PUCCH comprises: transmitting first indication information, wherein the first indication information comprises a first beam identity; and determining that the recovery beam for the PUCCH is a first beam corresponding to the first beam identity.
5. The method according to further aspect 4, wherein transmitting the first indication information comprises: transmitting the first indication information based on a physical uplink shared channel PUSCH medium access control MAC control element CE.
6. The method according to further aspect 4, wherein the first indication information further comprises the first TRP, and determining that the recovery beam for the PUCCH is the first beam corresponding to the first beam identity comprises: determining that a recovery beam for a PUCCH associated with the first TRP is the first beam corresponding to the first beam identity.
7. The method according to further aspect 6, wherein, in a case that a second TRP is in the beam failure state, using the PUCCH associated with the first TRP to transmit a beam failure recovery scheduling request, wherein the second TRP is different from the first TRP.
8. The method according to further aspect 4, wherein the first indication information further comprises the first TRP, and determining that the recovery beam for the PUCCH is the first beam corresponding to the first beam identity comprises: determining that a recovery beam for a PUCCH associated with a second TRP is the first beam corresponding to the first beam identity, wherein the second TRP is different from the first TRP.
9. The method according to further aspect 8, wherein, in a case that the second TRP is in the beam failure state, using the PUCCH associated with the second TRP to transmit a beam failure recovery scheduling request.
10. The method according to further aspect 1, wherein determining the recovery beam for the PUCCH comprises: determining that the recovery beam for the PUCCH is a beam corresponding to a designated control resource set.
11. The method according to further aspect 10, further comprising: determining that the designated control resource set is a control resource set with a smallest corresponding control resource set number in a latest time unit that needs to monitor a search space set; or, determining that the designated control resource set is a control resource set with a smallest corresponding control resource set number in control resource sets belonging to a first control resource set pool in a latest time unit that needs to monitor a search space set, wherein a first control resource set pool index is associated with the PUCCH.
12. The method according to further aspect 11, further comprising: determining the first control resource set pool index associated with the PUCCH according to configuration information of an association relationship between PUCCHs and control resource set pool indexes; or determining the first control resource set pool index associated with the PUCCH according to configuration information of an association relationship between PUCCHs and beam failure detection reference signal set indexes.
13. The method according to further aspect 10, further comprising: determining that the beam corresponding to the designated control resource set is a beam corresponding to a physical random access channel PRACH used by the terminal device.
14. The method according to further aspect 10, further comprising: transmitting second indication information, wherein the second indication information comprises a second beam identity; and determining that the beam corresponding to the designated control resource set is a second beam corresponding the second beam identity.
15. The method according to further aspect 14, wherein the second indication information comprises at least one of: a cell identity in the beam failure state; a TRP identity in the beam failure state; a second beam identity; or a TRP identity and/or a cell identity associated with the second beam identity.
16. The method according to further aspect 15, wherein the TRP identity comprises at least one of: a TRP identification number, a control resource set pool index identity, or a beam failure detection reference signal set identity.
17. The method according to any one of further aspects 1-16, wherein the PUCCH comprises at least one of: a PUCCH configured to transmit a scheduling request; a PUCCH configured to transmit a beam failure recovery scheduling request; or a PUCCH configured to transmit a non-scheduling request.
18. An apparatus for communication, comprising: a processing module, configured for the apparatus to detect that a first transmission and reception point TRP is in a beam failure state, and to determine a recovery beam for a physical uplink control channel PUCCH.
19. The apparatus according to further aspect 18, wherein the processing module is specifically configured to: determine that the recovery beam for the PUCCH is a beam corresponding to a physical random access channel PRACH.
20. The apparatus according to further aspect 19, wherein the processing module is further configured to: determine that a TRP corresponding to a PRACH resource used by the apparatus is the first TRP according to a mapping relationship between PRACH resources and TRPs.
21. The apparatus according to further aspect 18, further comprising: a transceiver module, configured to transmit first indication information, wherein the first indication information comprises a first beam identity; wherein the processing module is further configured to determine that the recovery beam for the PUCCH is a first beam corresponding to the first beam identity.
22. The apparatus according to further aspect 21, wherein the transceiver module is specifically configured to: transmit the first indication information based on a physical uplink shared channel PUSCH medium access control MAC control element CE.
23. The apparatus according to further aspect 21, wherein the first indication information further includes comprises the first TRP, and the processing module is specifically configured to:
   determine that a recovery beam for a PUCCH associated with the first TRP is the first beam corresponding to the first beam identity.
24. The apparatus according to further aspect 23, wherein in a case that a second TRP is in the beam failure state, the PUCCH associated with the first TRP is used to transmit a beam failure recovery scheduling request, wherein the second TRP is different from the first TRP.
25. The apparatus according to further aspect 21, wherein the first indication information further comprises the first TRP, and the processing module is further specifically configured to:
   determine that a recovery beam for a PUCCH associated with a second TRP is the first beam corresponding to the first beam identity, wherein the second TRP is different from the first TRP.
26. The apparatus according to further aspect 25, wherein in a case that the second TRP is in the beam failure state, the PUCCH associated with the second TRP is used to transmit a beam failure recovery scheduling request.
27. The apparatus according to further aspect 18, wherein the processing module is specifically configured to: determine that the recovery beam for the PUCCH is a beam corresponding to a designated control resource set.
28. The apparatus according to further aspect 27, wherein the processing module is further configured to: determine that the designated control resource set is a control resource set with a smallest corresponding control resource set number in a latest time unit that needs to monitor a search space set; or, determine that the designated control resource set is a control resource set with a smallest corresponding control resource set number in control resource sets belonging to a first control resource set pool in a latest time unit that needs to monitor a search space set, wherein a first control resource set pool index is associated with the PUCCH.
29. The apparatus according to further aspect 28, the processing module is further configured to: determine the first control resource set pool index associated with the PUCCH according to configuration information of an association relationship between PUCCHs and control resource set pool indexes; or, determine the first control resource set pool index associated with the PUCCH according to configuration information of an association relationship between PUCCHs and beam failure detection reference signal set indexes.
30. The apparatus according to further aspect 27, wherein the processing module is further configured to: determine that the beam corresponding to the designated control resource set is a beam corresponding to a physical random access channel PRACH used by the apparatus.
31. The apparatus according to further aspect 27, further comprising: a transceiver module, configured to transmit second indication information, wherein the second indication information comprises a second beam identity; wherein the processing module is configured to determine the beam corresponding to the designated control resource set as a second beam corresponding to the second beam identity.
32. The apparatus according to further aspect 31, wherein the second indication information comprises at least one of: a cell identity in the beam failure state; a TRP identity in the beam failure state; a second beam identity; or a TRP identity and/or a cell identity associated with the second beam identity.
33. The apparatus according to further aspect 32, wherein the TRP identity comprises at least one of:
   a TRP identification number, a control resource set pool index identity, or a beam failure detection reference signal set identity.
34. The apparatus according to any one of further aspects 18-33, wherein the PUCCH comprises at least one of: a PUCCH configured to transmit a scheduling request; a PUCCH configured to transmit a beam failure recovery scheduling request; or a PUCCH configured to transmit a non-scheduling request.
35. An apparatus for communication, comprising a processor and a memory, wherein the memory is stored with a computer program, and the processor executes the computer program stored in the memory, to cause the device to perform the method described in any one of further aspects 1 to 17.
36. An apparatus for communication, comprising: a processor and an interface circuit, wherein the interface circuit is configured to receive code instructions and transmit the code instructions to the processor; the processor is configured to run the code instructions to execute the method according to any one of further aspects 1-17.
37. A computer-readable storage medium configured to store instructions, which, when executed, cause the method according to any one of further aspects 1 to 17 to be implemented.

## Claims

1. A method for beam recovery of a physical uplink control channel, PUCCH, performed by a terminal device, comprising:
detecting, by the terminal device, that a first transmission and reception point, TRP, is in a beam failure state; and
determining a recovery beam for the PUCCH (21);
wherein determining the recovery beam for the PUCCH comprises:
transmitting first indication information, wherein the first indication information comprises a first beam identity (51); and
determining that the recovery beam for the PUCCH is a first beam corresponding to the first beam identity (52; 62).

2. The method according to claim 1, wherein transmitting the first indication information comprises:
transmitting the first indication information based on a physical uplink shared channel, PUSCH, medium access control, MAC, control element, CE (61).

3. The method according to claim 1 or 2, wherein the first indication information further comprises the first TRP, and determining that the recovery beam for the PUCCH is the first beam corresponding to the first beam identity comprises:
determining that a recovery beam for a PUCCH associated with the first TRP is the first beam corresponding to the first beam identity (72),
wherein in a case that a second TRP is in the beam failure state, using the PUCCH associated with the first TRP to transmit a beam failure recovery scheduling request, wherein the second TRP is different from the first TRP;
or,
determining that a recovery beam for a PUCCH associated with a second TRP is the first beam corresponding to the first beam identity, wherein the second TRP is different from the first TRP (82),
wherein in a case that the second TRP is in the beam failure state, using the PUCCH associated with the second TRP to transmit a beam failure recovery scheduling request.

4. An apparatus (140) for communication, comprising:
a processing module (1401), configured for the apparatus to detect that a first transmission and reception point, TRP, is in a beam failure state, and to determine a recovery beam for a physical uplink control channel, PUCCH.
a transceiver module, configured to transmit first indication information, wherein the first indication information comprises a first beam identity;
wherein the processing module (1401) is further configured to determine that the recovery beam for the PUCCH is a first beam corresponding to the first beam identity.

5. The apparatus (140) according to claim 4, wherein the transceiver module is specifically configured to:
transmit the first indication information based on a physical uplink shared channel, PUSCH, medium access control, MAC, control element, CE.

6. A computer-readable storage medium having stored thereon instructions that, when executed by a processor of a terminal device, cause the terminal device to perform the method for beam recovery of a physical uplink control channel, PUCCH, according to any one of claims 1 to 3.
